# EUROPEAN PATENT APPLICATION

(11) **EP 4 613 666 A1**
(43) Date of publication of application: **10.09.2025**
(21) Application number: 23885360.0
(22) Date of filing: 31.08.2023
(51) Int. Cl.: B65D 21/02, B65D 5/06, B65D 5/74

(54) **PAPER CONTAINER**

(30) Priority: 31.10.2022 JP 2022174575
(71) Applicant: Nippon Paper Industries Co., Ltd., Tokyo 114-0002 (JP)
(72) Inventor: NAKAMURA, Kouya, Tokyo 114-0002 (JP); TANAKA, Atsushi, Tokyo 114-0002 (JP)
(74) Representative: Murgitroyd & Company
(86) International application number: PCT/JP2023/031909
(87) International publication number: WO 2024/095594

(57) **Abstract**

In order to obtain a paper container that is a gable top-type paper container, which can achieve ease of stacking and space saving of an accommodation place at the time of transportation or the like, and which enables maintaining a state of resealing by pushing into an upper end portion, provided is a paper container, in which an angle formed by each of side surface forming panels (23, 24) and an upper edge (44) of each of body forming panels (7, 9) with which the side surface forming panels (23, 24) are contiguous is set to 2 degrees or more and 20 degrees or less; first auxiliary folding lines (32, 33) are formed on each of top surface forming panels (16, 17) so as to extend from right and left positions of a lower end of each of the top surface forming panels (16, 17) to positions closer to a center position of an upper end of each of the top surface forming panels (16, 17); and a length (L1) between intersections (34, 35) at which first auxiliary folding lines (32, 33) and a lower end of each of outer-side top sealing panels (14, 15) intersect with each other is set to from 5% to 50% of a lateral length (L2) of each of the outer-side top sealing panels (14, 15).

## Description

### Technical Field

The present invention relates to a paper container for storing a liquid content.

### Background Art

Hitherto, a paper container having the following configuration has been widely used as a paper container for storing a liquid content such as milk or juice. The paper container is formed of a paperboard material having a thermoplastic resin laminated on each of a front surface and a back surface thereof. The paper container includes four body forming panels. A vertical direction sealing panel joins edge portions of the body forming panels so that a quadrangular tubular body is formed. A pair of top surface forming panels including outer-side top sealing panels at upper portions thereof and being opposed to each other are contiguous with upper ends of the body forming panels, and a pair of side surface forming panels including inner-side top sealing panels at upper portions thereof and any one of which being formed into a pouring spout to be unsealed are contiguous with upper ends of the body forming panels. The pair of side surface forming panels are folded between the pair of top surface forming panels, and the outer-side top sealing panels and the inner-side top sealing panels are sealed and tightly closed, thereby forming a top portion of the paper container.

The paper container including the top portion formed as described above, is generally referred to as "gable top-type" or "gable roof-type," and top surfaces forming the top portion are largely inclined. Accordingly, when a large number of paper containers are to be accommodated in a box in a stacked manner at the time of, for example, transportation, bottom portions of paper containers located at the upper position are placed on top surfaces, which are largely inclined, of top portions of paper containers located at the lower position, resulting in unstable stacking. Thus, it is difficult to stack the paper containers. Further, even when the paper containers have been stacked, a large space is defined between each of the upper paper containers and each of the lower paper containers, and as a result, a volume of the accommodation box for accommodating the paper containers is unnecessarily increased. It is conceived that such problems can be solved by reducing an inclination angle of the top surfaces forming the top portion.

Further, in a case of a paper container for storing, for example, a content with a high viscosity such as yogurt, or jelly, such a content may not be able to be taken out from the paper container only by pulling out one of side surface forming panels to unseal a pouring spout. In this case, it is required to take out the content from the paper container, by also pulling out another one of the side surface forming panels for unsealing, that is, full opening of a top portion, and using a spoon or the like.

In such a case, at the time of resealing after the unsealing, sealing cannot be achieved only by folding the pulled out side surface forming panels on both sides between top surface forming panels, and hence it is required to perform sealing by another method.

In this respect, there is disclosed a paper container, which is a gable top-type paper container as described above, and which enables resealing a pouring spout after inner-side top sealing panels opposed to each other of a sealed top sealing portion are separated from each other, and then a side surface forming panel is pulled out to unseal the pouring spout (see, for example, Patent Literature 2).

The paper container as described in Patent Literature 2 includes, as illustrated in FIG. 10, a tubular body 50 and a top portion 51 that is contiguous with an upper edge portion of the tubular body 50. The top portion 51 includes: a pair of top surface forming panels 53 that are contiguous with front and rear body forming panels 52 of the tubular body 50, respectively; a pair of side surface forming panels 55 that are contiguous with right and left body forming panels 54 of the tubular body 50, respectively, and have been folded inward; and a pair of sealing portions 56 that are contiguous with upper edge portions of the top surface forming panels 53 and upper edge portions of the side surface forming panels 55. A sealing crease line 57 is formed on an upper portion of each of the right and left body forming panels 54, so as to extend in a front-rear direction, have both end portions respectively connected to front and rear end portions of an upper edge portion of each of the right and left body forming panels 54, and protrude downward as extending from the front and rear end portions toward a middle portion of the sealing crease line 57.

In resealing after unsealing, under a state in which both the sealing portions 56 have been closed, both the sealing portions 56 are pushed downward to push the front and rear top surface forming panels 53 into an upper end portion of the tubular body 50. Accordingly, the top portion 51 is folded along the sealing portions 56 to be dentedin a straight line, and the sealing portions 56 are brought into pressure contact with each other. As a result, both the top surface forming panels 53 hardly return to the original positions, and hence a state of the resealing can be maintained.

However, when an amount of pushing of the front and rear top surface forming panels 53 into the tubular body 50 is small, a pressure contact force between the sealing portions 56 is reduced. As a result, both the top surface forming panels 53 easily return to the original positions, and hence the state of the resealing cannot be maintained. In order to increase the amount of pushing of the front and rear top surface forming panels 53 into the tubular body 50, it is preferred that an angle formed by each of side edges of the top surface forming panels 53 that have formed the top portion 51, and the upper edge portion of each of the right and left body forming panels 54, that is, an inclination angle of the top surface forming panels 53 be larger. However, when the inclination angle of the top surface forming panels 53 is larger, it is difficult to push the front and rear top surface forming panels 53 into the upper end portion of the tubular body 50.

In view of the foregoing, in the paper container as described in Patent Literature 2, the sealing crease line 57 is formed on the upper portion of each of the right and left body forming panels 54, so as to extend in a front-rear direction, have the both end portions respectively connected to the front and rear end portions of the upper edge portion of each of the right and left body forming panels 54, and protrude downward as extending from the front and rear end portions toward the middle portion of the sealing crease line 57. When both the sealing portions 56 are pushed downward to push the front and rear top surface forming panels 53 into the upper end portion of the tubular body 50, the sealing crease lines 57 formed on the upper portions of the right and left body forming panels 54 are mountain-folded to be pushed and expanded outward. Thus, even when the top surface forming panels 53 have a large inclination angle, the top surface forming panels 53 can be pushed into the upper end portion of the tubular body 50.

### Citation List

### Patent Literature

[PTL 1] JP 2019-123540 A
[PTL 2] JP 2019-196191 A

### Summary of Invention

### Technical Problem

As described above, in the gable top-type paper container, ease of stacking and space saving of an accommodation place at the time of transportation can be achieved by reducing the inclination angle of the top surfaces forming the top portion. However, in the paper container as described in Patent Literature **2,** which is of a type that enables resealing by pushing the top surface forming panels into the upper end portion of the tubular body, there is a limitation in reducing inclination of the top surfaces forming the top portion.

The inventors of the present invention have conducted a series of tests in order to obtain a gable top-type paper container, which can satisfy space saving at the time of transportation and accommodation, a display effect in a store, and an improvement in efficiency of display work in a store, and which can have such a state of resealing that can accommodate a wide variety of contents. As a result, the inventors have found an optimum inclination angle of the top surfaces, and a shape of the top portion, which allows the state of resealing to be maintained by pushing the top surface forming panels into the upper end portion of the tubular body, at the angle described above, without separately preparing a clip or providing a chuck. Thus, the inventors have completed the present invention.

The present invention has an object to provide a paper container that is a gable top-type paper container, which can satisfy ease of stacking and space saving of an accommodation place at the time of transportation or the like, a display effect, and an increase in efficiency of display work in a store, and which enables maintaining a state of resealing so as to accommodate not only a related-art resealing method in which any one is formed into a pouring spout, but also applications in which full opening is required depending on a content.

### Solution to Problem

In order to achieve the above-mentioned object, according to the invention described in claim 1, there is provided a paper container, which is formed of a paperboard material having a thermoplastic resin laminated on each of a front surface and a back surface of the paperboard material, the paper container comprising: four body forming panels; a vertical direction sealing panel, which allows edge portions of two body forming panels among the four body forming panels to be joined to each other so that a quadrangular tubular body is formed; a pair of top surface forming panels, which are opposed to each other and contiguous with upper ends of the body forming panels, and include outer-side top sealing panels at upper portions of the pair of top surface forming panels, respectively; a pair of side surface forming panels, which are opposed to each other and contiguous with upper ends of the body forming panels, and include inner-side top sealing panels at upper portions of the pair of side surface forming panels, respectively, any one of the pair of side surface forming panels being formed into a pouring spout to be unsealed; and a top portion formed by folding the pair of side surface forming panels between the pair of top surface forming panels, and by sealing and tightly closing the outer-side top sealing panels and the inner-side top sealing panels. An angle formed by each of side edges of the top surface forming panels that have formed the top portion, and an upper edge of each of the body forming panels with which the side surface forming panels are contiguous, is set to 2 degrees or more and 20 degrees or less. Two inclined first auxiliary folding lines are formed on each of the pair of top surface forming panels so as to respectively extend from right and left positions of a lower end of each of the pair of top surface forming panels to positions closer to a center position of an upper end of each of the pair of top surface forming panels. A length between two intersections at which the two first auxiliary folding lines or imaginary lines obtained by extending the two first auxiliary folding lines and a lower end of each of the outer-side top sealing panels intersect with each other is from 5% to 50% of a lateral length of the outer-side top sealing panels.

According to the invention described in claim **1,** the angle formed by each of the side edges of the top surface forming panels that have formed the top portion, and the upper edge of each of the body forming panels with which the side surface forming panels are contiguous is set to 20 degrees or less. As a result, at the time of stacking paper containers, while avoiding top sealing portions of paper containers located at the lower position, bottom portions of paper containers located at the upper position can be placed on top surface forming panels, which are present between the top sealing portions, of the paper containers located at the lower position, in a stable state. Further, a space defined between the top portion of each of the paper containers located at the lower position, among the stacked paper containers, and the bottom portion of each of the paper containers located at the upper position, among the stacked paper containers, can be reduced. Thus, the paper container that can satisfy ease and stability of stacking and space saving of an accommodation place at the time of transportation or the like can be obtained.

Further, the angle formed by each of the side edges of the top surface forming panels that have formed the top portion, and the upper edge of each of the body forming panels with which the side surface forming panels are contiguous, is set to 2 degrees or more and 20 degrees or less. The two inclined first auxiliary folding lines are formed on each of the pair of top surface forming panels so as to respectively extend from the right and left positions of the lower end of each of the pair of top surface forming panels or the vicinities of the right and left positions toward the positions closer to the center position of the upper end of each of the pair of top surface forming panels. The length between the two intersections at which the two first auxiliary folding lines or the imaginary lines obtained by extending the two first auxiliary folding lines and the lower end of each of the outer-side top sealing panels intersect with each other is from 5% to 50% of the lateral length of the outer-side top sealing panels. As a result, at the time of separating the inner-side top sealing panels opposed to each other of the sealed top sealing portion, from each other, the top surface forming panels are easily folded. In addition thereto, at the time of resealing the pouring spout after pulling out the side surface forming panel to unseal the pouring spout, the pulled out side surface forming panel is returned to the original position, and the separated inner-side top sealing panels are overlapped with each other to close the pouring spout. Under the state of the poring spout being closed, the entire top sealing portion is folded rearward, and then a middle portion of the top sealing portion is pushed downward in a vertical direction. Accordingly, the top sealing portion is valley-folded at the two intersections or in the vicinity of the middle portion between the two intersections in the vertical direction, and the top portion forming panels are valley-folded along the first auxiliary folding lines in the vertical direction. Thus, the top portion takes a pyramid shape protruding downward beyond the top portion horizontal folding lines. The top portion hardly returns to the original shape from the pyramid shape protruding downward, due to resistance caused by a folded portion of the top sealing portion and folded portions of the top surface forming panels valley-folded along the first auxiliary folding lines. Accordingly, a state in which the pulled out inner-side top sealing panels are pushed in and overlapped with each other to close the pouring spout is maintained. As a result, the unsealed pouring spout can be resealed.

According the invention described in claim **2,** in claim 1, a cutout portion is formed in an upper edge, at a center position in a length direction, of the top sealing portion formed of the outer-side top sealing panels and the inner-side top sealing panels.

According to the invention described in claim 2, with the cutout portion being formed in the upper edge, at the center position in the length direction, of the top sealing portion formed of the outer-side top sealing panels and the inner-side top sealing panels, when the top sealing portion is folded rearward, and then the middle portion thereof is pushed downward in the vertical direction, the cutout portion facilitates pushing in the middle portion of the top sealing portion. Accordingly, the valley-folding of the top sealing portion in the vertical direction and valley-folding of the top portion forming panels along the first auxiliary folding lines can be accelerated and facilitated.

According to the invention described in claim 3, in claim 2, the cutout portion has a width of 1 mm or more and a depth of 1 mm or more and 4 mm or less.

According to the invention described in claim 3, with the cutout portion having the width of 1 mm or more and the depth of 1 mm or more and 4 mm or less, at the time of full opening, a crease is made on a center portion of the top sealing portion, starting from the cutout portion. Accordingly, at the time of pushing down the top sealing portion rearward and pushing the middle portion downward in the vertical direction, the pushing down can be performed with a smaller pushing-down force. As a result, the valley-folding of the top sealing portion in the vertical direction can be further facilitated.

### Advantageous Effects of Invention

As described above, with the paper container according to the present invention, ease of stacking and space saving of an accommodation place at the time of transportation, a display effect, and an increase in efficiency of display work in a store can be satisfied. In addition, a state of resealing can be maintained by pushing the top surface forming panels into the upper end portion of the tubular body, so as to accommodate not only a related-art resealing method in which any one is formed into a pouring spout, but also applications in which full opening is required depending on a content.

### Brief Description of Drawings

FIG. 1 is a perspective view for illustrating an example of a paper container according to an embodiment of the present invention.
FIG. 2 is a plan view for illustrating a carton blank for the paper container illustrated in FIG. 1.
FIG. 3 is an explanatory view for illustrating another example of first auxiliary folding lines of the paper container illustrated in FIG. 1.
FIG. 4 is an explanatory view for illustrating a relationship of a length between two intersections at which the first auxiliary folding lines of the paper container illustrated in FIG. 1 or imaginary lines obtained by extending the first auxiliary folding lines and a lower end of each of outer-side top sealing panels intersect each other, to a lateral length of the outer-side top sealing panels.
FIG. 5 is an explanatory view for illustrating a width and a depth of a cutout portion of the paper container illustrated in FIG. 1.
FIG. 6 is an explanatory view for illustrating a state in which paper containers, one of which is illustrated in FIG. 1, have been accommodated in a box in a stacked manner.
FIG. 7 is an explanatory view for illustrating work of resealing the paper container illustrated in FIG. 1 after unsealing.
FIG. 8 is a perspective explanatory view for illustrating a state in which the paper container illustrated in FIG. 1 has been resealed after the unsealing.
FIG. 9 is a sectional view taken along the line A-A of FIG. 8, in which the illustration of FIG. 8 has been partially omitted.

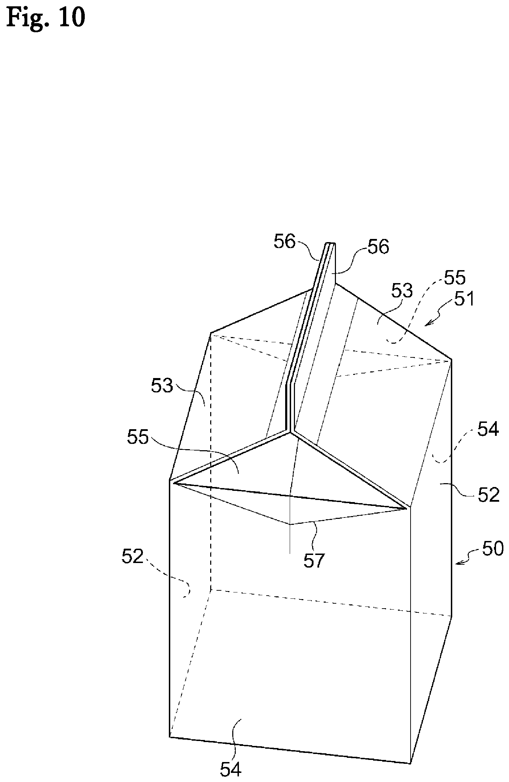

FIG. 10 is a perspective view for illustrating a related-art resealable paper container.

### Description of Embodiments

Now, a paper container according to an embodiment of the present invention is described in detail with reference to the drawings.

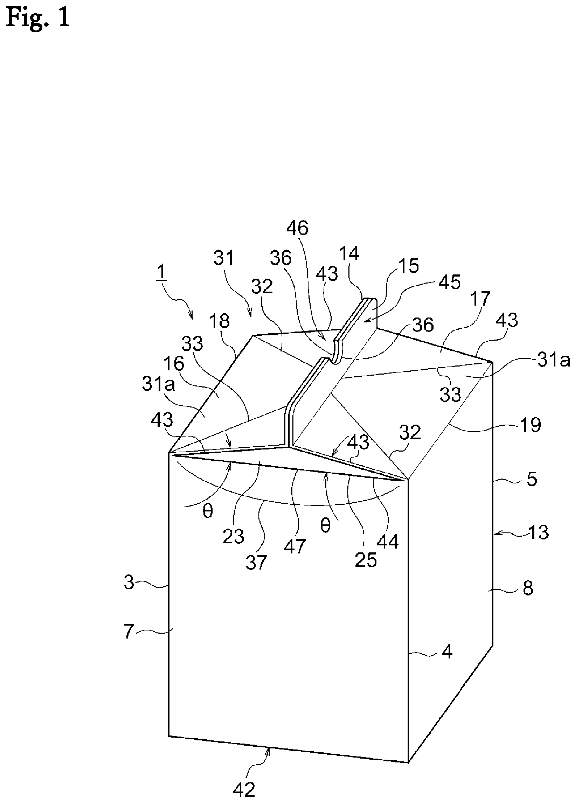

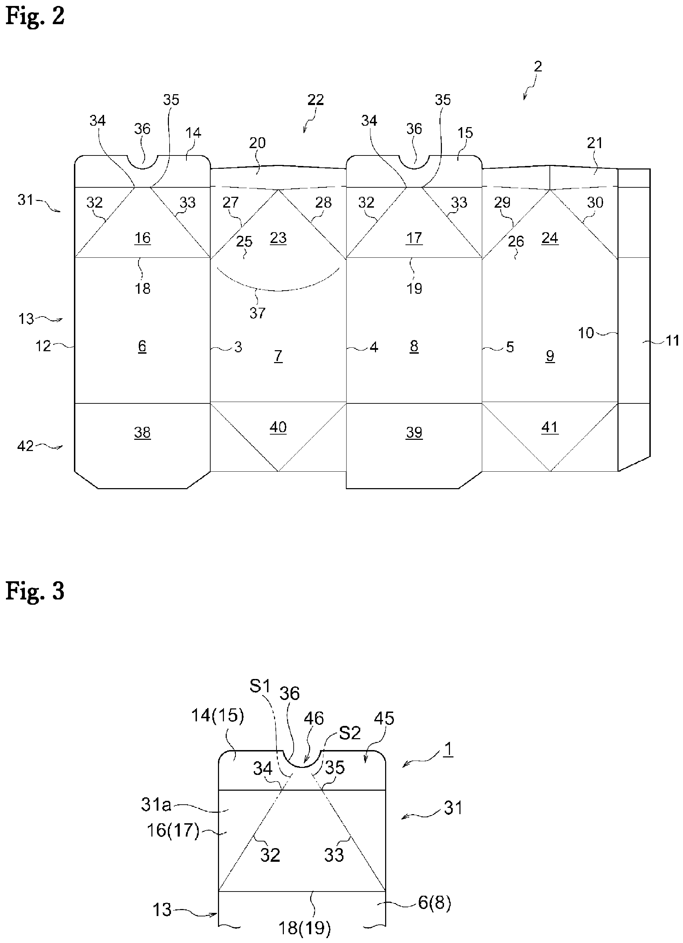

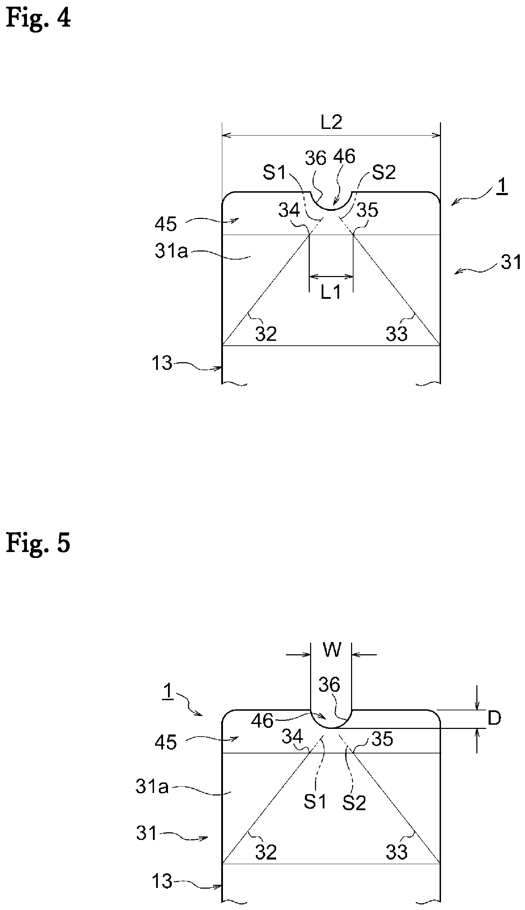

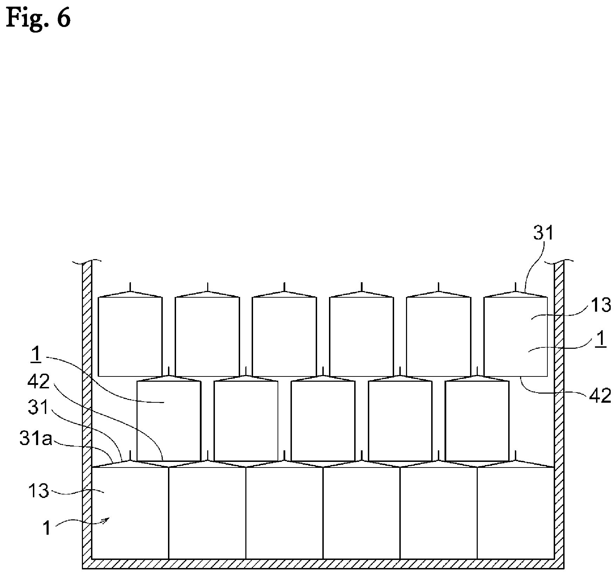

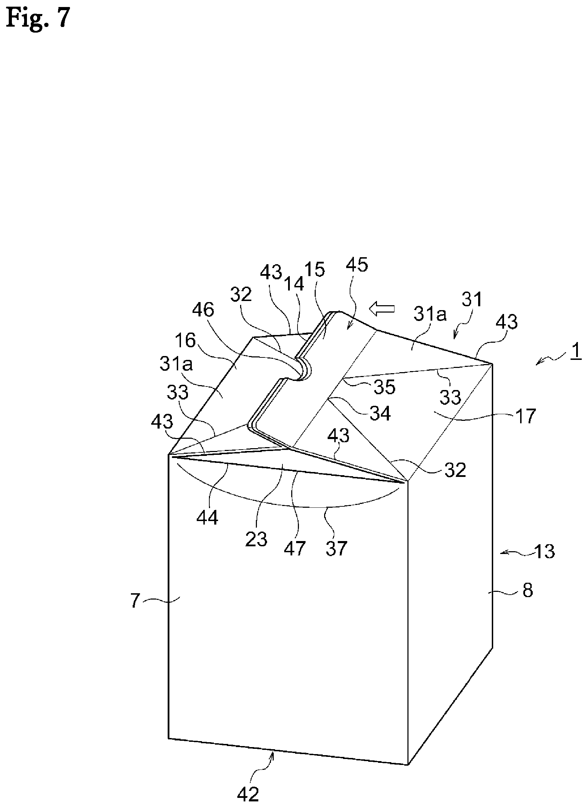

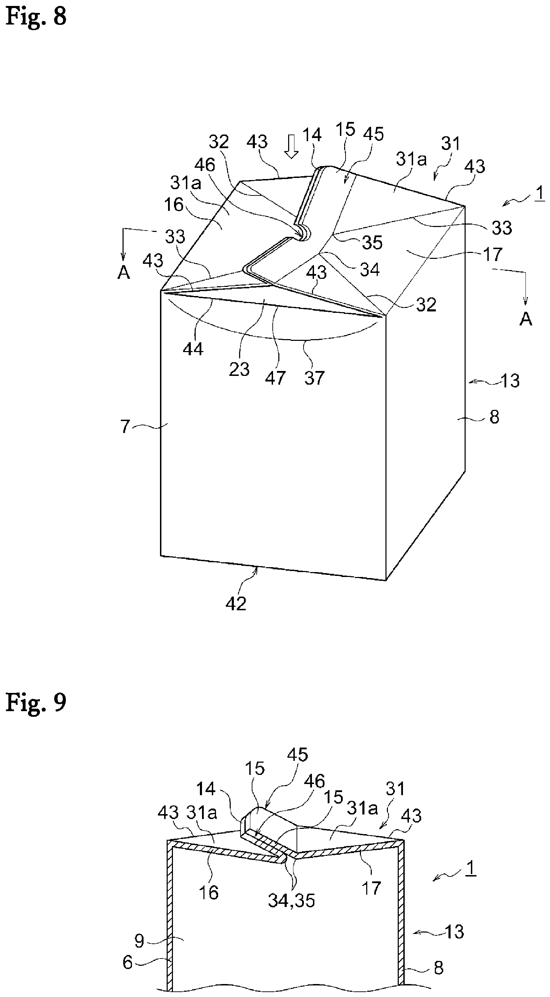

FIG. 1 to FIG. 9 show an example of the paper container according to the embodiment of the present invention. FIG. 1 is a perspective view for illustrating the paper container of this example. FIG. 2 is a plan view for illustrating a carton blank for the paper container illustrated in FIG. 1. FIG. 3 is an explanatory view for illustrating another example of first auxiliary folding lines of the paper container illustrated in FIG. 1. FIG. 4 is an explanatory view for illustrating a relationship of a length between two intersections at which the first auxiliary folding lines of the paper container illustrated in FIG. 1 or imaginary lines obtained by extending the first auxiliary folding lines and a lower end of each of outer-side top sealing panels intersect each other, to a lateral length of the outer-side top sealing panels. FIG. 5 is an explanatory view for illustrating a width and a depth of a cutout portion of the paper container illustrated in FIG. 1. FIG. 6 is an explanatory view for illustrating a state in which paper containers, one of which is illustrated in FIG. 1, have been accommodated in a box in a stacked manner. FIG. 7 is an explanatory view for illustrating work of resealing the paper container illustrated in FIG. 1 after unsealing. FIG. 8 is a perspective explanatory view for illustrating a state in which the paper container illustrated in FIG. 1 has been resealed after the unsealing. FIG. 9 is a sectional view taken along the line A-A of FIG. 8, in which the illustration of FIG. 8 has been partially omitted.

A paper container 1 in this example is formed of a carton blank 2 that is a paperboard material illustrated in FIG. 2 having a thermoplastic resin laminated on each of a front surface and a back surface thereof. The carton blank 2 includes body forming panels 6, 7, 8, and 9 contiguous with each other through body vertical folding lines 3, 4, and 5. At the time of forming the paper container 1, a vertical direction sealing panel 11 contiguous with the body forming panel 9 through a body vertical folding line 10 is joined to an edge portion 12 of the body forming panel 6 so that the four body forming panels 6, 7, 8, and 9 form a quadrangular tubular body 13 of the paper container 1.

A pair of top surface forming panels 16 and 17 are contiguous with an upper end of the body forming panel 6 and an upper end of the body forming panel 8 through top portion horizontal folding lines 18 and 19. The pair of top surface forming panels 16 and 17 include outer-side top sealing panels 14 and 15 at upper portions thereof, respectively, and are opposed to each other. Further, a pair of side surface forming panels 23 and 24 are contiguous with an upper end of the body forming panel 7 and an upper end of the body forming panel 9 through top portion horizontal folding lines 25 and 26. The pair of side surface forming panels 23 and 24 include inner-side top sealing panels 20 and 21 at upper portions thereof, respectively, and are opposed to each other. Any one of the pair of side surface forming panels 23 and 24 is formed into a pouring spout 22 and unsealed. In this example, the side surface forming panel 23 serves as an unsealed-side side surface forming panel.

Although the configuration that any one of the pair of side surface forming panels 23 and 24 is unsealed to be formed into the pouring spout 22 has been described, in the present invention, as described later, a mode in which the top portion is fully opened for use is also assumed. In this case, both of the pair of side surface forming panels 23 and 24 are formed into the pouring spouts 22.

Tuck-in folding lines 27, 28, 29, and 30 are formed on the side surface forming panels 23 and 24, and the side surface forming panels 23 and 24 are folded in along the tuck-in folding lines 27, 28, 29, and 30. At the time of forming the paper container 1, the pair of side surface forming panels 23 and 24 are folded between the pair of top surface forming panels 16 and 17, and the outer-side top sealing panels 14 and 15 and the inner-side top sealing panels 20 and 21 are sealed and tightly closed, thereby forming a gable top-type top portion 31 as illustrated in FIG. 1.

Further, two inclined first auxiliary folding lines 32 and 33 are formed on each of the top surface forming panels 16 and 17 so as to respectively extend from right and left positions of a lower end of each of the top surface forming panels 16 and 17, that is, both end positions of each of the top portion horizontal folding lines 18 and 19 toward a middle portion of an upper end of each of the top surface forming panels 16 and 17. In a general paper container, one first auxiliary folding line is formed on the pouring spout side on one side of each of the top surface forming panels 16 and 17, and the first auxiliary folding lines have a function of inducing folding at the time of folding the top surface forming panels 16 and 17, when the side surface forming panel is to be pulled out to unseal the pouring spout. Meanwhile, in the present invention, another two first auxiliary folding lines are added to the first auxiliary folding lines so that two first auxiliary folding lines are provided to each of the top surface forming panels 16 and 17. In addition to the function described above, those first auxiliary folding lines also have an effect of effectively maintaining a state of the pouring spout 22 being closed, which is described later.

The formation of the two first auxiliary folding lines 32 and 33 on each of the top surface forming panels 16 and 17 contributes also to an improvement in unsealability in the case of pulling out not only one side surface forming panel but also another side surface forming panel for unsealing (full opening of the top portion). In this example, the first auxiliary folding lines 32 and 33 are formed so as to respectively extend from the both end positions of each of the top portion horizontal folding lines 18 and 19, but may be formed so as to respectively extend from the vicinities of the both end positions.

Further, in this example, distal ends of the first auxiliary folding lines 32 and 33 are connected to the upper end of each of the top surface forming panels 16 and 17. However, as illustrated in FIG. 3, as long as the distal ends are present in the vicinity of the upper end of each of the top surface forming panels 16 and 17, the distal ends are not always required to be connected to the upper end of each of the top surface forming panels 16 and 17.

Further, an intersection (not shown) between the first auxiliary folding lines 32 and 33 or between imaginary lines S1 and S2 obtained by extending the first auxiliary folding lines 32 and 33 exists above a lower end of each of the outer-side top sealing panels 14 and 15. A length L1 between two intersections 34 and 35 at which the first auxiliary folding lines 32 and 33 or the imaginary lines S1 and S2 intersect with the lower end of each of the outer-side top sealing panels 14 and 15 (the upper end of each of the top surface forming panels 16 and 17) is from 5% to 50% of a lateral length L2 of the outer-side top sealing panels 14 and 15 (see FIG. 4).

Further, the outer-side top sealing panels 14 and 15 included in the upper portions of the top surface forming panels 16 and 17 protrude further than the inner-side top sealing panels 20 and 21 included in the upper portions of the side surface forming panels 23 and 24. A recessed portion 36 is formed in an upper edge, at a center position in a length direction, of each of the outer-side top sealing panels 14 and 15 so as to form a cutout portion in an upper edge, at a center position in a length direction, of a top sealing portion formed of the sealed outer-side top sealing panels 14 and 15 and inner-side top sealing panels 20 and 21, which is described later. A depth of the recessed portion 36 is such a depth that does not reach an upper edge of each of the inner-side top sealing panels 20 and 21.

A shape, a width, and a depth of the recessed portion 36 correspond to a shape, a width, and a depth of the cutout portion formed in the upper edge, at the center position in the length direction, of the top sealing portion, which is described later. The shape, width, and depth are described in detail in the part describing the top sealing portion.

Further, a second auxiliary folding line 37 having a downward circular arc shape is formed on the unsealed-side body forming panel 7 with which the unsealed-side side surface forming panel 23 is contiguous through the top portion horizontal folding line 25. The second auxiliary folding line 37 has end portions, which are arranged so as to connect intersections between end portions of the body vertical folding lines 3 and 4 formed respectively on both sides of the unsealed-side body forming panel 7 and end portions of the top portion horizontal folding line 25 or the vicinities of the intersections, to each other. In this example, the end portions of the second auxiliary folding line 37 are spaced slightly apart from the intersections between the end portions of the body vertical folding lines 3 and 4 and the end portions of the top portion horizontal folding line 25, and are located in the vicinities of the intersections.

Further, in this example, bottom surface forming panels 38 and 39 are contiguous with lower ends of the body forming panels 6 and 8, respectively, and inner panels 40 and 41 are contiguous with lower ends of the body forming panels 7 and 9, respectively. The inner panels 40 and 41 are folded to inner sides of the bottom surface forming panels 38 and 39, and abutment surfaces of the inner panels 40 and 41 and the bottom surface forming panels 38 and 39 are adhered to each other to thereby seal a bottom portion of the tubular body 13. Thus, a bottom portion 42 of the paper container 1 is formed.

In the paper container 1 formed of the carton blank 2 configured as described above, an angle (hereinafter referred to as "gable angle") θ formed by each of side edges 43 of the top surface forming panels 16 and 17 that have formed the top portion 28, and an upper edge 44 of each of the body forming panels 7 and 9 respectively contiguous with the side surface forming panels 23 and 24 and forming the tubular body 13, is 2 degrees or more and 20 degrees or less.

The above-mentioned numerical value of the gable angle θ is a numerical value obtained from tests and studies conducted in order to satisfy conditions, such as ease of stacking and space saving of an accommodation place at the time of transportation or the like of the paper container 1, and maintaining a state of the pouring spout being resealed after unsealing, and also from evaluations based on sensory tests of actual stacking.

With the gable angle θ being 20 degrees or less, at the time of stacking paper containers 1, while avoiding top sealing portions of paper containers 1 located at the lower position, bottom portions 42 of paper containers 1 located at the upper position are placed on top surfaces 31a, which are formed of top surface forming panels 16 and 17, of top portions 31, in a stable state. Then, a space defined between the top portion 31 of each of the paper containers 1 located at the lower position, among the stacked paper containers 1, and the bottom portion 42 of each of the paper containers 1 located at the upper position, among the stacked paper containers 1, is reduced (see FIG. 6).

When the gable angle θ exceeds 20 degrees, at the time of stacking the paper containers 1, end edges of the bottom portions 42 of the paper containers 1 located at the upper position, which are in abutment against the top surfaces 31a of the top portions 31 of the paper containers 1 located at the lower position, may slip from the top surfaces 31a of the top portions 31 of the paper containers 1 located at the lower position, to lose a balance. Thus, the staking is unstable, and hence satisfactory ease of stacking cannot be obtained. Further, the space defined between the top portion 31 of each of the paper containers 1 located at the lower position, among the stacked paper containers 1, and the bottom portion 42 of each of the paper containers 1 located at the upper position, among the stacked paper containers 1, does not satisfy space saving.

Further, when the gable angle θ exceeds 20 degrees, at the time of resealing, a larger force is required for pushing a middle portion of the top sealing portion described later downward in the vertical direction. In addition, a length of each of the side edges 43 of the top surface forming panels 16 and 17 that have formed the top portion 28 becomes larger as a value of θ becomes larger, and hence the side edges 43 are easily distorted at the time of the pushing downward in the vertical direction. In addition, a repulsive force in an unsealing direction is increased also at the time of the pushing downward. As a result, it is difficult to maintain a state of the pouring spout 22 being closed after the top portion is dented into a pyramid shape.

Further, with the gable angle θ being 2 degrees or more, at the time of resealing after the inner-side top sealing panels 20 and 21 opposed to each other of a top sealing portion 45 formed by sealing the outer-side top sealing panels 14 and 15 and the inner-side top sealing panels 20 and 21 are separated from each other, and then the side surface forming panel 23 to be formed into the pouring spout 22 is pulled out to unseal the pouring spout 22, under a state in which the separated inner-side top sealing panels 20 and 21 are overlapped with each other to close the pouring spout 22, the top sealing portion 45 is pushed down from the front to the rear (see FIG. 7), and then a middle portion of the top surface 31a is pushed downward in the vertical direction. Accordingly, a middle portion of the top sealing portion 45 is pushed in under a state in which the middle portion of the top sealing portion 45 has been valley-folded, and thus each of the top surface forming panels 16 and 17 is valley-folded along the first auxiliary folding lines 32 and 33. As a result, the top portion 31 is dented into a pyramid shape having the lowest point at a portion between the two intersections 34 and 35 at the lower end of each of the outer-side top sealing panels 14 and 15 (see FIG. 8 and FIG. 9).

In the series of operations described above, the top portion 31 is dented into the pyramid shape from the initial state of having a shape protruding upward, which allows closing with a click feeling at the time of pushing in, thereby being capable of providing a feeling of resealing.

Then, the top portion 31 dented into the pyramid shape hardly returns to the original state due to resistance caused by a folded portion of the top sealing portion 45 valley-folded at the center and folded portions of the top surface forming panels 16 and 17 valley-folded along the first auxiliary folding lines 32 and 33 and forming the top surfaces 31, and hence a state in which the pulled out inner-side top sealing panels 20 and 21 are pushed in and overlapped with each other to close the pouring spout 22 is maintained.

In addition, when, under a state in which the top portion 31 is dented into the pyramid shape, a weak force is applied upward or toward the center of the top portion 31 while pinching right portions and left portions of the outer-side top sealing panels 14 and 15, the lowest point of the pyramid shape can be further pushed downward. As a result, the closed state can be more firmly maintained.

When the gable angle θ is less than 2 degrees, in the top portion 31 dented into the pyramid shape, the folded portion of the top sealing portion 45 valley-folded at the two intersections 34 and 35 in the vertical direction and the folded portions of the top surface forming panels 16 and 17 valley-folded along the first auxiliary folding lines 32 and 33 and forming the top surfaces 31 each have a weak resistance force in the return direction. Thus, the dented top portion 31 returns to the original state, resulting in that a state in which the pulled out inner-side top sealing panels 20 and 21 are pushed in and overlapped with each other to close the pouring spout 22 cannot be maintained.

In the paper container 1 of the present invention, the gable angle θ is 2 degrees or more and 20 degrees or less. However, it is particularly preferred that the gable angle θ be set to 5 degrees or more and 15 degrees or less. When the gable angle θ is set to 5 degrees or more and 15 degrees or less, the above-mentioned characteristics can be more effectively obtained.

Further, in this example, the length L1 between the two intersections 34 and 35 at which the first auxiliary folding lines 32 and 33 or the imaginary lines S1 and S2 obtained by extending the first auxiliary folding lines 32 and 33 and the lower end of each of the outer-side top sealing panels 14 and 15 intersect with each other is from 5% to 50% of the lateral length L2 of the outer-side top sealing panels 14 and 15. Accordingly, when the middle portion of the top sealing portion 45 is folded rearward and pushed downward in the vertical direction, the top portion 31 takes the downward pyramid shape having the lowest point located below the top portion horizontal folding lines 18, 19, 25, and 26. Thus, strong resistance in the return direction is applied to the folded portion of the valley-folded top sealing portion 45 and the folded portions of the top surface forming panels 16 and 17 valley-folded along the first auxiliary folding lines 32 and 33 and forming the top surfaces 31. As a result, the state in which the pulled out inner-side top sealing panels 20 and 21 are pushed in and overlapped with each other to close the pouring spout 22 can be effectively maintained.

In a case in which the length L1 between the two intersections 34 and 35 is less than 5% of the lateral length L2 of the outer-side top sealing panels 14 and 15, even when the lowest point at the time of pushing downward in the vertical direction is located below the top portion horizontal folding lines 18, 19, 25, and 26, the top portion 31 takes a shallow downward pyramid shape, and hence the first auxiliary folding lines 32 and 33 are shallowly valley-folded without any conner. Thus, sufficient resistance in the return direction of the dented top portion 31 is not obtained, resulting in that the state in which the pulled out inner-side top sealing panels 20 and 21 are pushed in and overlapped with each other to close the pouring spout 22 may not be able to be maintained.

In addition, the first auxiliary folding lines 32 and 33 also have a function of inducing folding at the time of folding the top surface forming panels 16 and 17 when the side surface forming panels 23 and 24 are to be pulled out to unseal the pouring spout 22. However, when the length L1 between the two intersections 34 and 35 exceeds 50% of the lateral length L2 of the outer-side top sealing panels 14 and 15, at the time of unsealing the pouring spout 22, a position at which the top surface forming panels 16 and 17 are allowed to be folded is shifted from a position suitable for unsealing. As a result, unsealing cannot be easily performed.

The length L1 between the two intersections 34 and 35 at which the first auxiliary folding lines 32 and 33 or the imaginary lines S1 and S2 obtained by extending the first auxiliary folding lines 32 and 33 and the lower end of each of the outer-side top sealing panels 14 and 15 intersect with each other is from 5% to 50% of the lateral length L2 of the outer-side top sealing panels 14 and 15. However, it is particularly preferred that the length L1 be set to from 15% to 40% of the lateral length L2. With the length L1 being set to from 15% to 40% of the lateral length L2, the above-mentioned characteristics are effectively obtained.

Further, the cutout portion 46 is formed in the upper edge, at the center position in the length direction, of the top sealing portion 45 formed by sealing the outer-side top sealing panels 14 and 15 and the inner-side top sealing panels 20 and 21.

At the time of full opening, a crease is made on the center portion of the top sealing portion 45, starting from the cutout portion 46, and accordingly, at the time of resealing the pouring spout 22, a force of folding applied toward the center of the top sealing portion 45 when the middle portion of the top sealing portion 45 is pushed downward in the vertical direction is weakened. Thus, the pushing in of the middle portion is facilitated, and hence the folding of the top sealing portion 45 along the two intersections 34 and 35 in the vertical direction is facilitated.

The cutout portion 46 is formed of the recessed portions 36 formed in the upper edges, at the center position in the length direction, of the outer-side top sealing panels 14 and 15. A shape of the cutout portion 46 is not particularly limited, but is preferably a shape having a space defined at the center portion, such as a semicircular shape or a V-shape. In this example, the cutout portion 46 has a semicircular shape. When the cutout portion 46 has a shape having a space defined at the center portion, such as a semicircular shape or a V-shape, a width W of the cutout portion 46 is preferably 1 mm or more, more preferably 2 mm or more. Further, a depth D of the cutout portion 46 is desirably as large as possible within a range of the depth that does not reach the upper edge of each of the inner-side top sealing panels 20 and 21, and is preferably 1 mm or more and 4 mm or less, more preferably 2 mm or more and 3 mm or less (see FIG. 5).

When the top portion 31 is to be fully opened, with the cutout portion 46 being formed, a crease is made on the center portion of the top sealing portion 45, starting from the cutout portion 46, at the time of the full opening. After that, when the top portion 31 is to be dented into the pyramid shape, with a crease having been made in advance on the center portion of the top sealing portion 45, a point to be dented is made clear, and the pushing in is further facilitated.

According to the paper container 1 of this example configured as described above, with the gable angle θ being 20 degrees or less, at the time of stacking the paper containers 1, the bottom portion 42 of each of the paper containers 1 located at the upper position can be placed on the top surfaces 31a of the top portion 31 of each of the paper containers 1 located at the lower position, in a stable state. Further, the space defined between the top portion 31 of each of the paper containers 1 located at the lower position, among the stacked paper containers 1, and the bottom portion 42 of each of the paper containers 1 located at the upper position, among the stacked paper containers 1, is reduced. As a result, the paper container 1 that can satisfy ease of stacking and space saving of an accommodation place at the time of transportation or the like can be obtained.

Further, the gable angle θ is 2 degrees or more, and the length L1 between the two intersections 34 and 35 at which the first auxiliary folding lines 32 and 33 formed on each of the top surface forming panels 16 and 17 or the imaginary lines S1 and S2 obtained by extending the first auxiliary folding lines 32 and 33 and the lower end of each of the outer-side top sealing panels 14 and 15 intersect with each other is from 5% to 50% of the lateral length L2 of the outer-side top sealing panels 14 and 15. Accordingly, at the time of resealing after the inner-side top sealing panels 20 and 21 opposed to each other of the top sealing portion 45 formed by sealing the outer-side top sealing panels 14 and 15 and the inner-side top sealing panels 20 and 21 are separated from each other to unseal the pouring spout 22, the unsealed pouring spout 22 can be resealed as follows. Under a state in which the separated inner-side top sealing panels 20 and 21 are overlapped with each other to close the pouring spout 22, the top sealing portion 45 is pushed down rearward, and then the middle portion thereof is pushed downward in the vertical direction so that the top sealing portion 45 is valley-folded in the vicinity of the middle portion between the two intersections 34 and 35 in the vertical direction. Along with the valley-folding, the top surface forming panels 16 and 17 are valley-folded along the first auxiliary folding lines 32 and 33 so that the top portion 31 is dented into the pyramid shape having the lowest point at the portion between the two intersections 34 and 35 at the lower end of each of the outer-side top sealing panels 14 and 15. The top portion 31 dented into the pyramid shape hardly returns to the original state due to resistance caused by the folded portion of the top sealing portion 45 valley-folded at the two intersections 34 and 35 in the vertical direction and the folded portions of the top surface forming panels 16 and 17 valley-folded along the first auxiliary folding lines 32 and 33. As a result, the state in which the pulled out inner-side top sealing panels 20 and 21 are pushed in and overlapped with each other to close the pouring spout 22 is maintained, which allows resealing the unsealed pouring spout 22.

In this example, with the cutout portion 46 being formed in the upper edge, at the center position in the length direction, of the top sealing portion 45 formed by sealing the outer-side top sealing panels 14 and 15 and the inner-side top sealing panels 20 and 21, a crease is made on the center portion of the top sealing portion 45, starting from the cutout portion 46, at the time of full opening. After that, when the top portion 31 is to be dented into the pyramid shape, with a crease having been made in advance on the center portion of the top sealing portion 45, a point to be dented is made clear, and the pushing in is further facilitated.

In this example, with the cutout portion 46 having a semicircular shape, the width W of the cutout portion 46 being 1 mm or more, and the depth D of the cutout portion 46 being 1 mm or more and 4 mm or less, the force of folding applied toward the center of the top sealing portion 45 when the middle portion of the top sealing portion 45 is pushed downward in the vertical direction is effectively weakened, the point to be dented is made clear, and the pushing in is further facilitated.

Further, in this example, the second auxiliary folding line 37 having the downward circular arc shape is formed on the unsealed-side body forming panel 7 with which the unsealed-side side surface forming panel 23 is contiguous through the top portion horizontal folding line 25, and the second auxiliary folding line 37 has the end portions, which are arranged so as to connect the intersections between the end portions of the body vertical folding lines 3 and 4 formed respectively on both sides of the unsealed-side body forming panel 7 and the end portions of the top portion horizontal folding line 25 or the vicinities of the intersections, to each other. Thus, the unsealed side can be confirmed at a glance. Further, at the time of unsealing, a top-portion corner portion 47 of the tubular body 13, which is formed by the top portion horizontal folding line 25, is pushed inward of the paper container 1, and the body forming panel 7 is mountain-folded along the second auxiliary folding line 37. The top-portion corner portion 47 is bent inward of the paper container 1, and an upper portion of the body forming panel 7 located between the top portion horizontal folding line 25 and the second auxiliary crease line 37 is dented inward of the paper container 1. As a result, a wide space is defined between the body forming panel 7 and the side surface forming panel 23, and hence unsealing can be easily performed with fingers inserted into this space.

In this example, the second auxiliary crease line 37 is formed only on the unsealed-side body forming panel 7. However, the second auxiliary crease line 37 may be similarly formed also on the body forming panel 9 on a side opposite to the unsealed-side body forming panel 7, which contributes to an improvement in unsealability at the time of full opening of the top portion 31.

### Reference Signs List

1 paper container
2 carton blank
3, 4, 5 body vertical folding line
6, 7, 8, 9 body forming panel
10 body vertical folding line
11 vertical direction sealing panel
12 edge portion
13 tubular body
14, 15 outer-side top sealing panel
16, 17 top surface forming panel
18, 19 top portion horizontal folding line
20, 21 inner-side top sealing panel
22 pouring spout
23, 24 side surface forming panel
25, 26 top portion horizontal folding line
27, 28, 29, 30 tuck-in folding line
31 top portion
31a top surface
32, 33 first auxiliary folding line
34, 35 intersection
36 recessed portion
37 second auxiliary folding line
38, 39 bottom surface forming panel
40, 41 inner panel
42 bottom portion
43 side edge
44 upper edge
45 top sealing portion
46 cutout portion
47 top-portion corner portion
θ gable angle
S1, S2 imaginary line
L1 length between two intersections
L2 lateral length of top sealing portion
W width of cutout portion
D depth of cutout portion

## Claims

1. A paper container, which is formed of a paperboard material having a thermoplastic resin laminated on each of a front surface and a back surface of the paperboard material, the paper container comprising:
four body forming panels;
a vertical direction sealing panel, which allows edge portions of two body forming panels among the four body forming panels to be joined to each other so that a quadrangular tubular body is formed;
a pair of top surface forming panels, which are opposed to each other and contiguous with upper ends of the body forming panels, and include outer-side top sealing panels at upper portions of the pair of top surface forming panels, respectively;
a pair of side surface forming panels, which are opposed to each other and contiguous with upper ends of the body forming panels, and include inner-side top sealing panels at upper portions of the pair of side surface forming panels, respectively, any one of the pair of side surface forming panels being formed into a pouring spout to be unsealed; and
a top portion formed by folding the pair of side surface forming panels between the pair of top surface forming panels, and by sealing and tightly closing the outer-side top sealing panels and the inner-side top sealing panels,
wherein an angle formed by each of side edges of the top surface forming panels that have formed the top portion, and an upper edge of each of the body forming panels with which the side surface forming panels are contiguous, is set to 2 degrees or more and 20 degrees or less,
wherein two inclined first auxiliary folding lines are formed on each of the pair of top surface panels so as to respectively extend from right and left positions of a lower end of each of the pair of top surface panels to positions closer to a center position of an upper end of each of the pair of top surface panels, and
wherein a length between two intersections at which the two first auxiliary folding lines or imaginary lines obtained by extending the two first auxiliary folding lines and a lower end of each of the outer-side top sealing panels intersect with each other is from 5% to 50% of a lateral length of the outer-side top sealing panels.

2. The paper container according to claim 1, wherein a cutout portion is formed in an upper edge, at a center position in a length direction, of the top sealing portion formed of the outer-side top sealing panels and the inner-side top sealing panels.

3. The paper container according to claim 2, wherein the cutout portion has a width of 1 mm or more and a depth of 1 mm or more and 4 mm or less.
